(19) Europäisches Patentamt
European Patent Office
Office européen des brevets

(11) **EP 1 384 417 B1**

(12) **EUROPÄISCHE PATENTSCHRIFT**

(45) Veröffentlichungstag und Bekanntmachung des Hinweises auf die Patenterteilung:
**20.09.2006 Patentblatt 2006/38**

(51) Int Cl.:
*A45D 34/04* *(2006.01)*     *A45D 40/26* *(2006.01)*
*A46B 9/02* *(2006.01)*

(21) Anmeldenummer: **03016116.0**

(22) Anmeldetag: **16.07.2003**

(54) **Sichelförmiger Applikator für flüssige oder pastöse Medien**

Scythe-shaped applicator for liquid or pasty media

Applicateur falciforme pour produits liquides ou pâteux

(84) Benannte Vertragsstaaten:
**AT BE BG CH CY CZ DE DK EE ES FI FR GB GR HU IE IT LI LU MC NL PT RO SE SI SK TR**

(30) Priorität: **23.07.2002 DE 10233341**

(43) Veröffentlichungstag der Anmeldung:
**28.01.2004 Patentblatt 2004/05**

(60) Teilanmeldung:
**05026666.7 / 1 632 148**
**05103920.4 / 1 563 758**

(73) Patentinhaber: **Beiersdorf AG**
**20253 Hamburg (DE)**

(72) Erfinder: **Eckers, Lorenz**
**21255 Tostedt (DE)**

(56) Entgegenhaltungen:
| | |
|---|---|
| WO-A-00/54623 | DE-A- 2 559 273 |
| DE-U- 8 010 740 | GB-A- 1 408 536 |
| US-A- 4 635 659 | US-B1- 6 237 609 |

EP 1 384 417 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft einen sichelförmigen Applikator für flüssige oder pastöse Medien, insbesondere für dekorative Kosmetika wie Mascara, mit einem sichelförmigen, aussteifenden Kern aus einem ersten Kunststoff-Material, der zumindest im Bereich seines vorderen Endes von einer Trägerhülse aus einem zweiten Kunststoff-Material umgeben ist, die eine Vielzahl von radial nach außen auskragenden Fingern aufweist, die einstükkig an die Trägerhülse angeformt sind und aus dem zweiten Kunststoff-Material bestehen, wobei mehrere über den Umfang der Trägerhülse verteilte Finger einen Fingerkranz bilden und wobei in Längsrichtung der Trägerhülse eine Vielzahl N von Fingerkränzen mit gleicher Fingeranzahl n hintereinander angeordnet sind.

Ein entsprechender Applikator ist in verschiedenen Anwendungsbereichen einsetzbar. Im folgenden soll beispielhaft von der Applikation von Wimperntusche, der so genannten Mascara, ausgegangen werden, jedoch ist der erfindungsgemäße Applikator in gleichartiger Weise unter anderem auch für das Färben von Haarsträhnen oder für das Auftragen von Pharmazeutika zu verwenden.

Ein Applikator für Mascara sollte sicherstellen, dass die Mascara in einfacher Weise gleichmäßig aufzutragen ist. Zu diesem Zweck muss der Applikator die Voraussetzung erfüllen, dass die Wimpern vor dem Auftragen der Mascara zunächst gekämmt und somit in gewünschter Weise ausgerichtet werden. Darüber hinaus soll der Applikator soviel Mascara aufnehmen können, dass sämtliche Wimpern mit dem Applikator gefärbt werden können, ohne diesen mehrfach in den Mascara-Vorratsbehälter eintauchen zu müssen. Damit der Auftrag der Mascara gleichmäßig und klecksfrei erfolgt, muss sichergestellt sein, dass nicht übermäßig viel Mascara an dem Applikator anhaftet, weshalb dieser üblicherweise beim Herausziehen aus dem Mascara-Vorratsbehälter abgestreift wird. Da der Applikator als frei auskragendes Bauteil mit einem endseitigen Handgriff ausgebildet ist, muss er eine ausreichende Stabilität besitzen, um die bei Benutzung einwirkenden Kräfte sicher aufnehmen zu können, ohne dass die Gefahr eines Abbrechens besteht. Andererseits muss der Applikator jedoch so flexibel sein, dass er sich an die Krümmung der Augenlider anpassen lässt und bei fehlerhafter Anwendung ausreichend nachgiebig ist, um Verletzungen des Benutzers im Augenbereich zu vermeiden.

Bisher war es üblich (US 4,982,838), einen Mascara-Applikator aus mehreren Drähten herzustellen, zwischen denen eine Vielzahl von kurzen Borsten angeordnet werden. Nach Verdrillen der Drähte sind die Borsten fest zwischen den Drähten gehalten. Ein wesentlicher Nachteil einer derartigen gedrehten Applikatorbürste besteht darin, dass aufgrund der kompakten Anordnung der Borsten ein nicht unerheblicher Anteil der Mascara bei Benutzung in den zwischen den Borsten gebildeten Stauräumen zurückgehalten wird, in denen sich Verunreinigungen, beispielsweise Sporen oder Bakterien entwickeln können. Darüber hinaus ist mit einer derartigen Applikatorbürste aufgrund der Vielzahl von dichtgepackten Borsten ein gleichmäßiges Kämmen der Wimpern nicht zu erzielen, da die Borsten mit den Wimpern nicht in kammartigen Eingriff treten können. Eine gedrehte Applikatorbürste ist des Weiteren relativ teuer in der Herstellung, da die Drähte und die Borsten einzeln erzeugt und die Borsten anschließend auf konstruktiv aufwendigen Anlagen in die Drähte eingedreht werden müssen. Dabei müssen die Borstenenden zusätzlich entgratet und geschliffen werden, um scharfkantige Enden und eine damit verbundene Verletzungsgefahr zu vermeiden. Des Weiteren besteht bei gedrehten Applikatorbürsten ein zusätzlicher Nachteil darin, dass die aus den verdrillten Metalldrähten gebildete Metallseele bei Gebrauch abknicken kann, was einerseits zur Unbrauchbarkeit der Applikatorbürste führt und andererseits eine hohe Gefährdung der Augenpartie des Anwenders mit sich bringt.

Neben den rotationssymmetrischen (linearen) Mascarabürsten sind auch sichelförmig gebogene Mascarabürsten bekannt. (z.B. US 6,237,609) Diese im Normalfall werden durch Verbiegen der linearen Mascarabürsten hergestellt. Da die Borsten senkrecht zur inneren Drahtseele angeordnet sind, stehen die Borsten auf der äußeren Seite weiter auseinander und auf der inneren Seite enger zu einander.

Diese ungleichmäßige Borstendichte führt zu einer mangelhaften Apllikatorleistung, da sich das Auftrags und Durchkämmungsverhalten - durch die unterschiedlichen Borstenabstände an Innen- und Außenkurve der Bürste - stark unterscheidet

Um die Nachteile von gedrehten Applikatorbürsten mit Borstenbesatz zu vermeiden, ist gemäß der WO 00/54623 ein Applikator entwickelt worden, von dem im Oberbegriff des Anspruchs 1 ausgegangen wird. Ein derartiger Applikator besitzt einen sichelförmigen, aussteifenden Kern, auf den ein elastomerer Kunststoffmantel in Form einer Trägerhülse mit radial nach außen vorstehenden, einstückig angeformten Fingern aufgespritzt ist, wobei die Finger einen sich zu ihrem freien Ende hin verjüngenden Querschnitt aufweisen. Durch diese Ausgestaltung ist erreicht, dass die Finger an ihren freien Enden einen größeren gegenseitigen Abstand als in ihren unteren Fußbereichen besitzen, in denen sie mit der Trägerhülse verbunden sind. Der relativ große Abstand der freien Trägerenden bewirkt, dass im Bereich der Spitzen der Finger keine oder nur eine geringe Menge Mascara aufgenommen wird, die sich mit einem üblicherweise vorhandenen Abstreifer fast vollständig entfernen lässt. Somit ist der Spitzenbereich der Finger bei Gebrauch des Applikators im wesentlichen mascarafrei und führt eine reine Kämmwirkung aus. Dies hat zur Folge, dass die Wimpern gekämmt werden, bevor sie mit der im Fußbereich der Finger aufgenommenen Mascara in Kontakt kommen. Darüber hinaus ermöglicht es der relativ geringe Abstand zwischen benachbarten Fingern in deren Fußbereich, eine ausreichend große Menge an Mascara aufzunehmen, so dass das mehrmalige Eintauchen des Applikators in den Vorratsbehälter üblicherweise nicht notwendig ist. Es hat sich jedoch gezeigt, dass die Kämmwirkung und der Mascaraauftrag von der konstruktiven Ausgestaltung des Applikators und insbesondere der Anzahl, Ausgestaltung und Anordnung der Finger abhängig ist und dass sich nicht mit jedem Applikator der genannten Art zufrieden stellende Ergebnisse erzielen lassen.

Der Erfindung liegt die Aufgabe zugrunde, einen gattungsgemäßen Applikator derart weiterzubilden, dass sowohl eine verbesserte Kämmwirkung als auch eine gute und gleichmäßige Aufbringung des aufzutragenden Mediums gewährleistet ist.

Diese Aufgabe wird erfindungsgemäß bei einem Applikator der eingangs genannten Art durch die im kennzeichnenden Teil des Anspruchs 1 aufgeführte Parameter-Kombination gelöst.

Alle Fingerkränze sollten die gleiche Anzahl von Fingern aufweisen, die vorzugsweise über den Umfang der Trägerhülse gleichverteilt sind, d. h. einen gleichen gegenseitigen Winkelabstand besitzen. Die Anzahl $n$ der Finger pro Fingerkranz liegt bei dem erfindungsgemäßen Applikator zwischen 8 und 16, wobei insbesondere eine gerade Anzahl $n$ der Finger (8,10,12 oder 16 Finger) vorgesehen sein sollte.

Während die Anzahl $n$ der Finger pro Fingerkranz die Anordnungsdichte der Finger in Umfangsrichtung bestimmt, ist die Anordnungsdichte der Finger in Längsrichtung der Trägerhülse und somit des Applikators durch die Anzahl $N$ der in Axialrichtung hintereinander liegenden Fingerkränze bestimmt. Der Abstand zwischen benachbarten Fingerkränzen sollte innerhalb eines vorbestimmten Bereiches liegen und darüber hinaus sollten auch nicht zu viele Fingerkränze vorgesehen sein, um die Handhabung des Applikators nicht zu erschweren und um auch bei relativ kleinen Wimpern noch einen guten Mascara-Auftrag zu erreichen. Erfindungsgemäß ist deshalb vorgesehen, dass der Applikator zwischen 14 und 30 Fingerkränze und insbesondere zwischen 20 und 27 Fingerkränze aufweist.

Die Finger aller Fingerkränze können mit gleichen Abmessungen ausgestaltet sein. Es hat sich jedoch als vorteilhaft erwiesen, sowohl am vorderen als auch am hinteren Ende des Applikators Fingerkränze mit Fingern verringerter Abmessungen auszubilden. Diese Fingerkränze kleinerer Finger werden zwar bei der Anzahl $N$ der Fingerkränze mitgezählt, jedoch beziehen sich die folgenden Ausführungen auf die Finger eines im mittleren Bereich liegenden normalen Fingerkranzes. Dabei ist vorgesehen, dass die Länge $l$ der Finger, d.h. das Maß, um das der Finger in radialer Richtung von der Trägerhülse hervorsteht, im Bereich von 1,5 mm bis 3,0 mm liegt.

Auch der gegenseitige Abstand $s_1$ benachbarter Fingerkränze ist ein Maß, dass die Kämmwirkung und den Mascaraauftrag wesentlich beeinflusst. Der Abstand $s_1$, der zwischen den freien Enden gleichartiger Finger benachbarter Fingerkränze gemessen wird, sollte erfindungsgemäß im Bereich von 0,6 mm bis 1,5 mm liegen.

Im Bereich der Füße der Finger, d.h. im Anschlussbereich der Finger an die Trägerhülse, sollten die Finger benachbarter Fingerkränze einen lichten Abstand $s_2$ in der Größenordnung von 0,2 mm bis 0,5 mm aufweisen.

In einem ersten Ausführungsbeispiel der Erfindung ist vorgesehen, dass der Applikator folgende Parameter-Kombination besitzt:

I. $n = 10$
II. $N = 27$
III. $l = 2,4$ mm
IV. $s_1 = 0,95$ mm
V. $s_2 = 0,25$ mm
VI. $r_K = 25$ mm

In einer weiteren möglichen Ausgestaltung ist vorgesehen, dass die Parameter in Kombination folgende Werte annehmen:

I. $n = 12$
II. $N = 22$
III. $l = 2,4$ mm
IV. $s_1 = 1,2$ mm
V. $s_2 = 0,42$ mm
VI. $r_K = 15$ mm

Der Applikator weist eine im wesentlichen kreiszylinderförmige Konfiguration auf, d.h. eine Hüllfläche des Applikators besitzt einen Kreisquerschnitt, der entweder über die gesamte Länge des Fingerfeldes konstant ist oder lediglich in dessen Endbereichen in genannter Weise verringert ist. Für die praktische Handhabung des Applikators hat es sich als sinnvoll erwiesen, wenn dieser einen Außendurchmesser $D$ im Bereich von 6,0 mm bis 10,0 mm und insbesondere von 8,0 mm aufweist.

Der aussteifende, sichelförmige Kern besitzt vorzugsweise einen Kreisquerschnitt, dessen Durchmesser im Bereich von 1,5 mm bis 2,5 mm liegt und insbesondere 2,0 mm beträgt. Der Kern kann über seine gesamte Länge einen gleich bleibenden Querschnitt aufweisen, vorzugsweise ist jedoch vorgesehen, dass der Kern sich an seinem vorderen Ende verjüngt.

Die stetige gleichsinnige Krümmung des Kerns hat bevorzugt einen Radius $r_K$ von 12 mm bis 50 mm, der sich am typischen Radius des menschlichen Augenlides orientiert.

Im Sinne der Erfindung ist auch eine nicht gleichsinnige Krümmung des Kerns, z. B. in Form eines Elipsenausschnittes.

Die Wandstärke $a$ der Trägerhülse bestimmt wesentlich die elastische Lagerung der Finger und somit deren Verformbarkeit. In dem Bereich, in dem der Kern einen konstanten Querschnitt aufweist, sollte die radiale Wandstärke a der Trägerhülse im Bereich von 0,3 mm bis 1,0 mm liegen und insbesondere 0,6 mm betragen. Wenn sich der Kern an seinem vorderen Ende verjüngt, wird die Wandstärke a der Trägerhülse in diesem Bereich entsprechend vergrößert, so dass die Außenkontur der Trägerhülse kreiszylinderförmig ist.

Der Applikator wird vorzugsweise im Zwei-Komponenten-Verfahren hergestellt. In einem ersten Schritt wird der sichelförmige Kern aus dem ersten Kunststoff-Material gespritzt, woraufhin dann in einem zweiten Schritt ein elastomeres zweites Kunststoff-Material zur Bildung der Trägerhülse und der Finger auf den Kern aufgespritzt wird.

Das Zusammensetzen der Bürste, durch einschieben eines sichelförmigen Kerns in eine vorgefertigte Trägerhülse, ist jedoch auch möglich.

Die gesamte axiale Länge L der Trägerhülse sollte im Bereich von 20,0 mm bis 35,0 mm liegen und insbesondere 25,0 mm betragen.

Erfindungsgemäß kann vorgesehen sein, den vorderen Bereich des Applikators mit erhöhter Flexibilität auszubilden. Dies kann dadurch erreicht werden, dass die Trägerhülse mit ihrem vorderen Endabschnitt um das Maß v über das vordere Ende des Kerns hinausragt, so dass der vordere Endabschnitt des Applikators vollständig aus dem elastomeren zweiten Kunststoff-Material gebildet ist. Das Maß v kann im Bereich von 1,0 mm bis 8,0 mm liegen und beträgt vorzugsweise 3,0 mm.

In der einfachsten geometrischen Ausgestaltung liegen die Finger jedes Fingerkranzes mit ihren Mittelachsen in einer gemeinsamen, sich senkrecht zur Längsrichtung des Applikators erstreckenden Ebene, so dass kein Versatz einzelner Finger in Längsrichtung der Trägerhülse bzw. des Applikators vorgesehen ist. Alternativ ist es jedoch auch möglich, dass zumindest ein Finger eines Fingerkranzes gegenüber den anderen Fingern des Fingerkranzes um das Maß $v_F$ in Längsrichtung der Trägerhülse versetzt angeordnet ist. In bevorzugter Ausgestaltung der Erfindung ist dabei vorgesehen, dass jeder zweite Finger des Fingerkranzes versetzt angeordnet ist, so dass die Finger eines Fingerkranzes in zwei parallelen, in Längsrichtung der Trägerhülse beabstandeten, sich senkrecht zur Längsrichtung der Trägerhülse erstreckenden Ebenen liegen. Das Versatzmaß $v_F$ wird vorzugsweise als Vielfaches des Fußdurchmessers $d_F$ der Finger angegeben zu $v_F = f \times d_F$, wobei f ein Faktor im Bereich von 0 (kein Versatz) bis 1,5 (maximaler Versatz) ist.

Neben einem Versatz einzelner Finger innerhalb eines Fingerkranzes, können auch benachbarte Fingerkränze relativ zueinander in Umfangsrichtung um einen Winkel $\alpha$ versetzt angeordnet sein, wobei $\alpha$ zwischen 0° und 10° liegen sollte. Wenn $\alpha = 0°$ ist und somit kein Winkelversatz vorhanden ist, liegen die Spitzen gleichartiger Finger der Fingerkränze auf einer in Längsrichtung des Applikators verlaufenden Geraden. Wenn zwischen benachbarten Fingerkränzen ein Winkelversatz vorhanden ist, sind die Spitzen gleichartiger Finger der Fingerkränze auf einer umlaufenden Spirallinie angeordnet.

In bevorzugter Ausgestaltung der Erfindung ist vorgesehen, dass jeder Finger kegelförmig ausgebildet ist und einen Fußdurchmesser $d_F$ im Bereich von 0,4 mm bis 1,0 mm und insbesondere von 0,68 mm besitzt. Die Finger sind an ihrem freien Ende vorzugsweise abgerundet, wobei ein Radius R der Abrundung im Bereich von 0,02 mm und 0,2 mm liegt und insbesondere 0,05 mm beträgt.

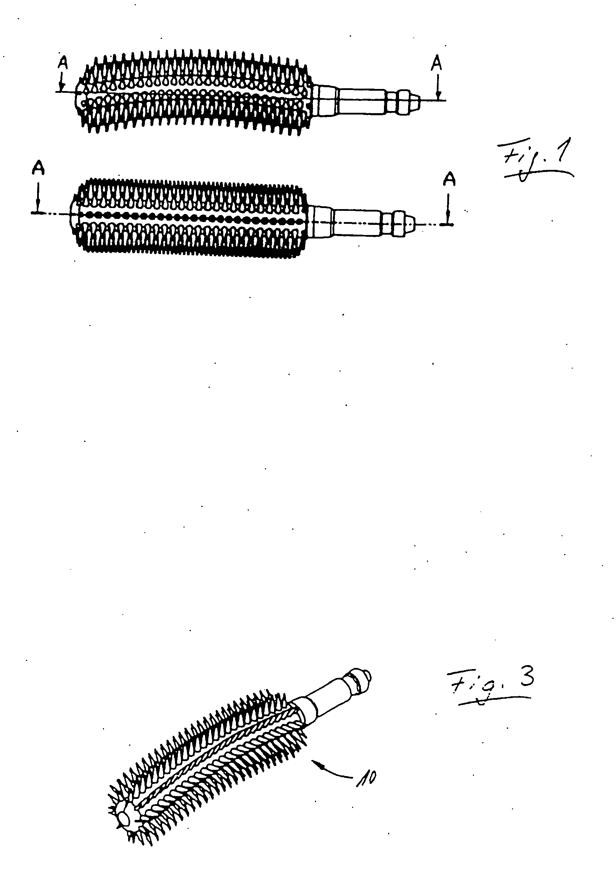

Die Finger der einzelnen Fingerkränze bilden bevorzugt parallele Scheiben, dadurch wird eine besonders gute Kämmwirkung erzielt. (s. Fig. 1)

Weitere Einzelheiten und Merkmale der Erfindung sind aus der folgenden Beschreibung von Ausführungsbeispielen unter Bezugnahme auf die Zeichnung ersichtlich. Es zeigen:

Figur 1   die Seitenansichten eines Applikators mit Lotrecht zur Achse A-A angeordneten Borsten, gemäß einem grundsätzlichen Aufbau,

Figur 2   einen Längsschnitt durch den Applikator gemäß Fig. 1,

Figur 3   die perspektivische Darstellung des Applikators aus Fig. 1,

Figur 4   eine ausschnittsweise Seitenansicht des Applikators gemäß Fig. 1,

Figur 5   einen ausschnittsweisen Längsschnitt des Applikators gemäß Fig. 1,

Figur 6   einen Längsschnitt durch einen Finger in vergrößerter Darstellung,

Figur 7   eine ausschnittsweise Seitenansicht eines Applikators mit alternativer Fingeranordnung,

Figur 8   die Seitenansichten eines sichelförmig gebogenen Kerns, gemäß einem grundsätzlichen Aufbau

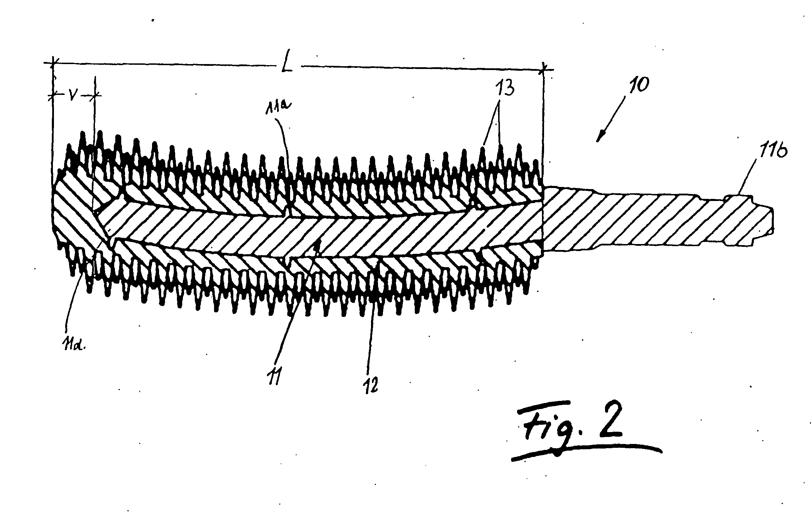

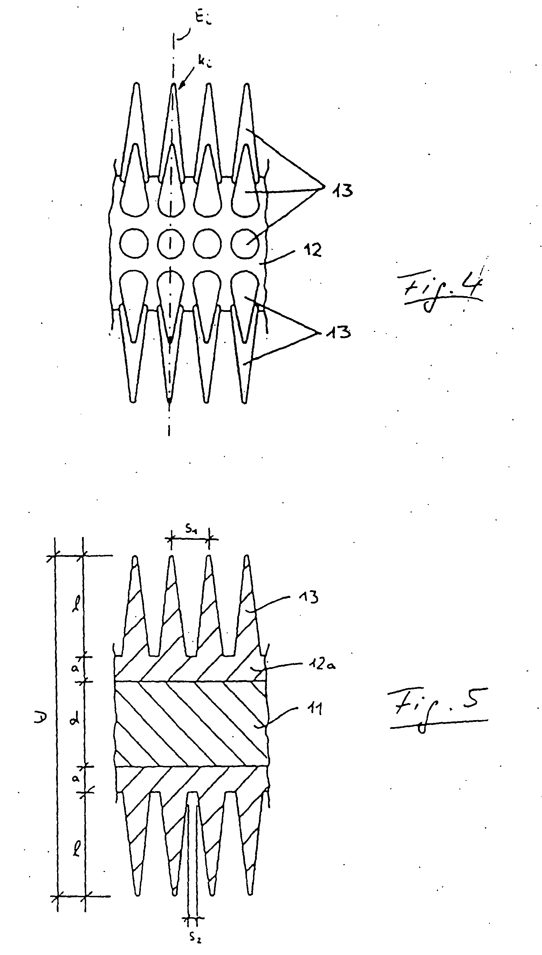

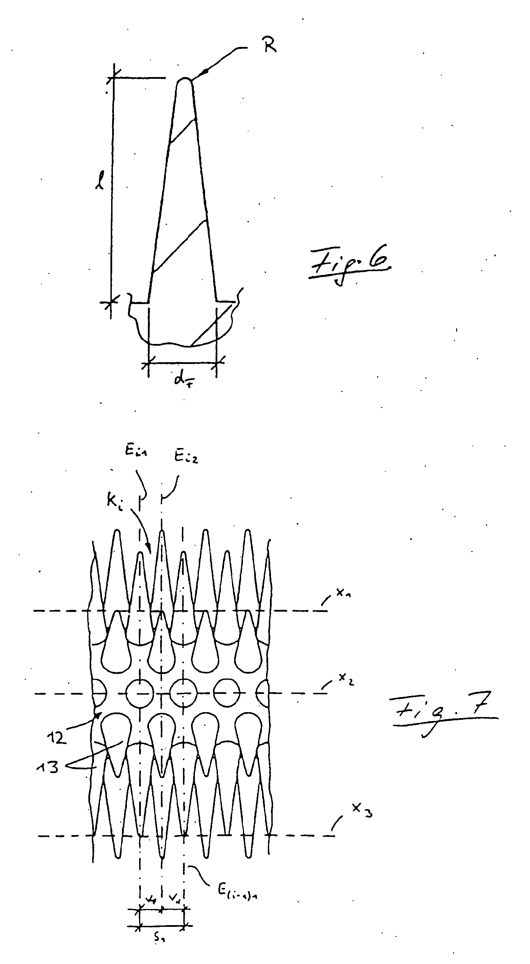

Die Fig. 1 bis 3 zeigen einen Applikator 10 grundsätzlichen Aufbaus anhand dessen in Verbindung mit den Fig. 4 bis 7 die einzelnen Parameter erläutert werden sollen.

Der Applikator 10 besitzt einen sichelförmigen, aussteifenden Kern 11 (Fig. 8) mit einem Kreisquerschnitt, der an seinem hinteren Ende mit Verbindungselementen 11b zur Anbringung an einem nicht dargestellten Aufnahmeteil versehen ist. In seinem vorderen Endbereich trägt der Kern 11 einen verbreiterten Kopf 11d, der zusammen mit im mittleren Abschnitt des Kerns 11 ausgebildeten Ausnehmungen 11a der formschlüssigen Befestigung des Kerns 11 dient. Die stetige gleichsinnige Krümmung des Kerns hat bevorzugt einen Radius $r_K$ = 12 mm bis 50 mm, der sich am typischen Radius des menschlichen Augenlides orientiert. Der Kern 11 besteht aus einem ersten Kunststoff-Material und wird in der ersten Phase eines Zwei-Komponenten-Spritzgussverfahrens hergestellt.

Auf den sichelförmigen Kern 11 wird in einer zweiten Phase des Zwei-Komponenten-Spritzgussverfahrens eine Trägerhülse 12 (Fig. 2) aus einem elastomeren zweiten Kunststoff-Material aufgespritzt, die aufgrund des Eingriffs mit den Ausnehmungen 11a und dem Kopf 11d des Kerns 11 mit diesem fest verbunden ist. Die Außenkontur der Trägerhülse 12 ist kreiszylindrisch, so dass sie in einem mittleren und rückseitigen Abschnitt, in dem sie den einen konstanten Querschnitt aufweisenden Mittelbereich des Kerns 11 umgibt, eine konstante Wandstärke besitzt, während ihre Wandstärke in demjenigen Bereich, in dem sie den sich verjüngenden Bereich des Kerns 11 umgibt, ständig zunimmt und die Querschnittsverminderung des Kerns 11 ausgleicht. Die Trägerhülse 12 ragt mit einem vorderen Endabschnitt 12b um das Maß v (siehe Fig. 2) über das vordere Ende des Kerns 11 hinaus, so dass der vordere Endabschnitt 12b vollständig aus dem elastomeren zweiten Kunststoff-Material gebildet ist.

Auf der Außenseite der Trägerhülse 12 sind radial nach außen auskragende, sich zu ihrem freien Ende hin kegelförmig verjüngende Finger 13 einstückig angeformt, die ebenfalls aus dem elastomeren zweiten Kunststoff-Material bestehen. Die Finger 13 sind in Form von insgesamt N Fingerkränzen $K_1$, $K_2$, $K_3$, $K_4$,...$K_{26}$, $K_{27}$ angeordnet, die in Längsrichtung der Trägerhülse 12 mit gleichem Abstand hintereinander liegend angeordnet sind. Jeder Fingerkranz $K_i$ (siehe Fig. 4) umfasst eine gewisse Anzahl n von Fingern 13, die jeweils in einer sich senkrecht zur Längsrichtung der Trägerhülse 12 erstreckenden Ebene $E_i$ liegen, von denen in Fig. 4 nur eine angedeutet ist, und unter gleichem Winkelabstand über den Umfang der Trägerhülse 12 gleich verteilt sind. Bei dem in den Fig. 1 bis 3 dargestellten Ausführungsbeispiel sind insgesamt N = 27 Fingerkränze vorgesehen, die alle n = 10 Finger 13 umfassen. Die Anordnung und Ausgestaltung der Finger 13 ist bei den meisten Fingerkränzen identisch, lediglich der am hinteren Ende ausgebildete erste Fingerkranz $K_1$ sowie die beiden letzten, am vorderen Ende der Trägerhülse 12 angeordneten Fingerkränze $K_{26}$ und $K_{27}$ weisen Finger verringerter Abmessungen auf, während die Fingerkränze $K_2$ bis $K_{25}$ eine identische Konfiguration besitzen. Angaben zu der Dimensionierung der Finger 13 beziehen sich immer auf die identisch ausgebildeten Fingerkränze.

Wie Fig. 2 zeigt, besitzt die Trägerhülse 12 eine Gesamtlänge L, wobei der Kern 11 an seinem hinteren, die Verbindungselemente 11b aufweisenden Ende aus der Trägerhülse 12 herausragt. Die Finger der einzelnen Fingerkränze bilden parallele Scheiben.

Wie Fig. 4 zeigt, können die Finger 13 eines beliebigen Fingerkranzes $K_i$ mit ihren Spitzen auf einer sich senkrecht zur Längsrichtung der Trägerhülse 12 erstreckenden Ebene $E_i$ liegen, wobei die Ebenen benachbarter Fingerkränze einen konstanten gegenseitigen Abstand aufweisen.

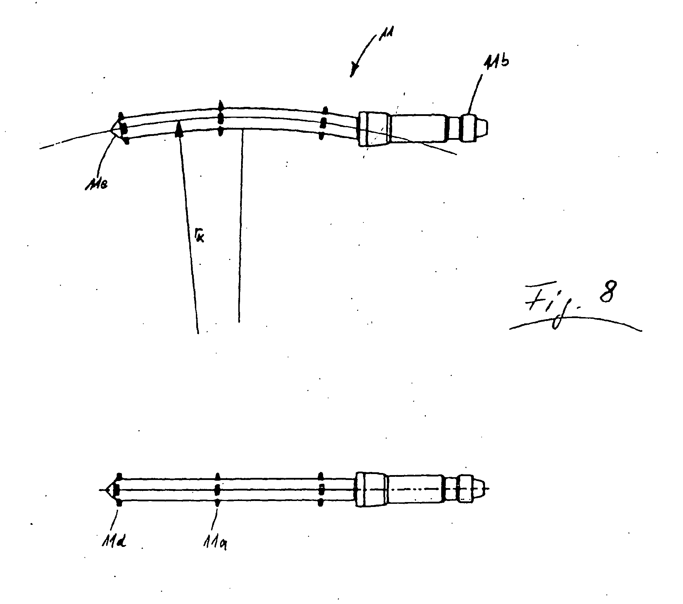

In Fig. 7 ist eine alternative Ausführung dargestellt, bei der in Umfangsrichtung gesehen jeder zweite Finger 13 des Fingerkranzes $K_i$ in Längsrichtung der Trägerhülse 12 gegenüber den anderen Fingern des Fingerkranzes versetzt angeordnet ist. Dies führt dazu, dass die Hälfte der Finger des Fingerkranzes $K_i$ mit ihren Spitzen in einer ersten, sich senkrecht zur Längsrichtung der Trägerhülse 12 erstreckenden Ebene $E_{i1}$ und die andere Hälfte der Finger in einer dazu parallelen, um das Maß $V_F$ in Längsrichtung der Trägerhülse 12 versetzten Ebene $E_{i2}$ angeordnet ist. Der Abstand der Ebenen $E_{i1}$ und $E_{i2}$, d.h. das Versatzmaß $V_F$ der Finger in Längsrichtung der Trägerhülse 12 ist für alle Fingerkränze gleich. Darüber hinaus kann vorgesehen sein, dass die Ebene $E_{i2}$ einen Abstand $V_k$ zu der Ebene $E_{(i-1)1}$ des benachbarten Fingerkranzes aufweist, der gleich dem Versatzmaß $V_F$ ist.

Wie Fig. 7 zeigt, sind die einzelnen Fingerkränze in Längsrichtung der Trägerhülse 12 zueinander ausgerichtet, d.h. sie weisen in Umfangsrichtung der Trägerhülse 12 keinen Winkelversatz auf. Dies führt dazu, dass die Spitzen gleichartiger Finger der einzelnen Fingerkränze auf geraden, parallel zur Längsachse der Trägerhülse 12 verlaufenden Verbindungslinien liegen, von denen in Fig. 7 beispielhaft die drei Linien $x_1$, $x_2$ und $x_3$ dargestellt sind.

Fig. 5 zeigt die geometrischen Verhältnisse im Mittelbereich des Applikators 10. Der Kern 11 weist in seinem Abschnitt konstanten kreisförmigen Querschnitts einen Außendurchmesser d auf und ist von der Trägerhülse 12 mit einer Wanddicke a umgeben. Die Trägerhülse 12 trägt außenseitig die nach außen auskragenden, kegelförmigen, d.h. sich zum freien Ende konisch verjüngenden Finger 13, die eine radiale Länge l besitzen. Der Gesamtdurchmesser d einer Hüllfläche des Applikators ergibt sich somit zu:

$$D = d + 2a + 2l.$$

Die zugeordneten Finger 13 benachbarter Fingerkränze besitzen an ihren freien Enden einen gegenseitigen Abstand $s_1$, während zwischen den Fingerfüßen zugeordneter Finger benachbarter Fingerkränze ein lichter Abstand $s_2$ besteht, wie in Fig. 5 dargestellt ist. Die Finger 13 besitzen die Form eines Kreiskegels, wobei die Grund- oder Anschlussfläche des Fingers einen Durchmesser $d_F$ (siehe Fig. 6) aufweist. Die Finger sind an ihrem äußeren freien Ende mit einem Radius R abgerundet.

Für die einzelnen Parameter haben sich folgende Bereiche als sinnvoll erwiesen:

1. Gesamtdurchmesser D des Applikators: 6,0 mm bis 10,0 mm.

2. Krümmungsradius $r_K$ des Kerns: 12 mm bis 50 mm

3. Kerndurchmesser d: 1,5 mm bis 2,5 mm.

4. Wandstärke a Trägerhülse: 0,3 mm bis 1,0 mm.

5. Fingerlänge l: 1,5 mm bis 3,0 mm.

6. Abstand $s_1$ der Fingerspitzen benachbarter Fingerkränze: 0,6 mm bis 1,5 mm.

7. Abstand $s_2$ der Fingerfüße benachbarter Fingerkränze: 0,2 mm bis 0,5 mm.

8. Gesamtlänge L der Trägerhülse: 20,0 mm bis 35,0 mm.

9. Länge v des vorderen, nicht ausgesteiften Bereichs: 1,0 mm bis 8,0 mm.

10. Anzahl n der Finger pro Fingerkranz: 8 bis 16, insbesondere 8, 10, 12 oder 16.

11. Anzahl N der Fingerkränze: 14 bis 30.

12. Durchmesser $d_F$ des Fingerfußes: 0,4 mm bis 1,0 mm.

13. Rundungsradius R der Fingerspitze: 0,02 mm bis 0,2 mm.

14. Axialer Versatz $v_F$ der Finger eines Fingerkranzes: $v_F = f \times d_F$, wobei $0 \leq f \leq 1,5$

15. Versatzwinkel $\alpha$ benachbarter Fingerkränze in Umfangsrichtung: $0° \leq \alpha \leq 10°$.


**Patentansprüche**

1. Applikator für flüssige oder pastöse Medien, insbesondere für dekorative Kosmetika wie Mascara, mit einem sichelförmigen, aussteifenden Kern (11) aus einem ersten Kunststoff-Material, der zumindest im Bereich seines vorderen Endes von einer Trägerhülse (12) aus einem zweiten Kunststoff-Material umgeben ist, die eine Vielzahl von radial nach außen auskragenden Fingern (13) aufweist, die einstückig an die Trägerhülse (12) angeformt sind und aus dem zweiten Kunststoff-Material bestehen, wobei mehrere über den Umfang der Trägerhülse (12) verteilte Finger (13) einen Fingerkranz ($K_1$, $K_2$, $K_3$...) bilden und wobei in Längsrichtung der Trägerhülse (12) eine Vielzahl N von Fingerkränzen ($K_1$, $K_2$, $K_3$...) mit gleicher Fingeranzahl n hintereinander angeordnet sind, **gekennzeichnet durch** folgende Parameter-Kombination:

    I. Anzahl n der Finger (13) pro Fingerkranz ($K_1$, $K_2$, $K_3$...): 8 bis 16,

    II. Anzahl N der in Axialrichtung der Trägerhülse hintereinander liegenden Fingerkränze ($K_1$, $K_2$, $K_3$...): $14 \leq N \leq 30$, insbesondere $20 \leq N \leq 27$

    III. Abstand $s_1$ der freien Enden gleichartiger Finger (13) benachbarter Fingerkränze ($K_1$, $K_2$, $K_3$...): $0,6 \text{ mm} \leq s_1 \leq 1,5 \text{ mm}$ und

    IV. Abstand $s_2$ der Füße gleichartiger Finger (13) benachbarter Fingerkränze ($K_1$, $K_2$, $K_3$...): $0,2 \text{ mm} \leq s_2 \leq 0,5 \text{ mm}$ und

**dadurch gekennzeichnet, dass**

    a) die Länge l der Finger (13): $1,5 \text{ mm} \leq l \leq 3,0$ mm beträgt,

    b) der Biegeradius, das heißt die Krümmung, des Kerns im Bereich der Trägerhülse von $r_K = 12$ mm bis 50 mm beträgt und

    c) die Finger senkrecht zur Applikatorachse (A-A) stehen und Fingerkränze parallele Scheiben bilden.

2. Applikator nach Anspruch 1, **gekennzeichnet durch** folgende Parameter-Kombination:

    I. n = 10   IV. $s_1$ = 0,95 mm
    II. N = 27   V. $s_2$ = 0,25 mm.
    III. l = 2,4 mm   VI. $r_K$ = 25 mm

3. Applikator nach Anspruch 1, **gekennzeichnet durch** folgende Parameter-Kombination:

    I. n = 12   IV. $s_1$ = 1,2 mm
    II. N = 22   V. $s_2$ = 0,42 mm.
    III. l = 2,4 mm   VI. $r_K$ = 15 mm

4. Applikator nach einem der Ansprüche 1 bis 3, **dadurch gekennzeichnet, dass** die Finger (13) des Fingerkranzes ($K_1$, $K_2$, $K_3$...) über den Umfang der Trägerhülse (12) gleich verteilt sind.

5. Applikator nach einem der Ansprüche 1 bis 4, **dadurch gekennzeichnet, dass** der Applikator einen Außendurchmesser D im Bereich von 6,0 mm bis 10,0 mm aufweist.

6. Applikator nach Anspruch 5, **dadurch gekennzeichnet, dass** der Außendurchmesser D des Applikators 8,0 mm beträgt.

7. Applikator nach einem der Ansprüche 1 bis 6, **dadurch gekennzeichnet, dass** der Außendurchmesser d des Kerns (11) im Bereich von 1,5 mm bis 2,5 mm liegt.

8. Applikator nach Anspruch 7, **dadurch gekennzeichnet, dass** der Außendurchmesser d des Kerns (11) 2,0 mm beträgt.

9. Applikator nach einem der Ansprüche 1 bis 8, **dadurch gekennzeichnet, dass** der Kern (11) sich an seinem vorderen Ende verjüngt.

10. Applikator nach einem der Ansprüche 1 bis 9, **dadurch gekennzeichnet, dass** die Trägerhülse (12) eine radiale Wandstärke a im Bereich von 0,3 mm bis 1,0 mm aufweist.

11. Applikator nach Anspruch 10, **dadurch gekenn-**

**zeichnet, dass** die radiale Wandstärke a der Trägerhülse (12) 0,6 mm beträgt.

12. Applikator nach einem der Ansprüche 1 bis 11, **dadurch gekennzeichnet, dass** die Trägerhülse (12) zusammen mit den Fingern (13) aus einem elastomeren Kunststoff besteht.

13. Applikator nach einem der Ansprüche 1 bis 12, **dadurch gekennzeichnet, dass** die Trägerhülse (12) eine axiale Länge L im Bereich von 20,0 mm bis 35,0 mm besitzt.

14. Applikator nach Anspruch 13, **dadurch gekennzeichnet, dass** die axiale Länge L der Trägerhülse (12) 25,0 mm beträgt.

15. Applikator nach einem der Ansprüche 1 bis 14, **dadurch gekennzeichnet, dass** die Trägerhülse (13) in ihrem vorderen Endabschnitt (12b) um das Maß v über das vordere Ende (11d) des Kerns (11) hinausragt, wobei v im Bereich von 1,0 mm bis 8,0 mm liegt.

16. Applikator nach Anspruch 15, **dadurch gekennzeichnet, dass** das Maß v 3,0 mm beträgt.

17. Applikator nach einem der Ansprüche 1 bis 16, **dadurch gekennzeichnet, dass** zumindest ein Finger eines Fingerkranzes gegenüber den anderen Fingern des Fingerkranzes um das Maß $V_F$ in Längsrichtung der Trägerhülse (12) versetzt angeordnet ist.

18. Applikator nach Anspruch 17, **dadurch gekennzeichnet, dass** jeder zweite Finger des Fingerkranzes versetzt angeordnet ist.

19. Applikator nach Anspruch 17 oder 18, **dadurch gekennzeichnet**, **dadurch gekennzeichnet, dass** für das Maß $v_F$ gilt:

$$v_F = f \times d_F,$$

wobei $d_F$ der Fußdurchmesser des Fingers (13) ist und f ein Faktor im Bereich von 0 bis 1,5 ist.

20. Applikator nach einem der Ansprüche 1 bis 19, **dadurch gekennzeichnet, dass** benachbarte Fingerkränze ($K_1$, $K_2$, $K_3$...) in Umfangsrichtung um einen Winkel α versetzt zueinander angeordnet sind, wobei gilt: $0° \leq \alpha \leq 10°$.

21. Applikator nach einem der Ansprüche 1 bis 20, **dadurch gekennzeichnet, dass** der Fußdurchmesser

$d_F$ des Fingers (13) im Bereich von 0,4 mm bis 1,0 mm liegt.

22. Applikator nach Anspruch 21, **dadurch gekennzeichnet, dass** der Fußdurchmesser $d_F$ des Fingers (13) 0,68 mm beträgt.

23. Applikator nach einem der Ansprüche 1 bis 22, **dadurch gekennzeichnet, dass** die Finger (13) kegel- oder pyramidenförmig ausgebildet und an ihrem freien Ende abgerundet sind.

24. Applikator nach Anspruch 23, **dadurch gekennzeichnet, dass** ein Radius R der Abrundung im Bereich von 0,02 mm und 0,2 mm liegt.

25. Applikator nach Anspruch 24, **dadurch gekennzeichnet, dass** der Radius R der Abrundung 0,05 mm beträgt.

**Claims**

1. Applicator for liquid or pasty media, in particular for decorative cosmetics such as mascara, having a stiffening sickle-shaped core (11) which is made of a first plastics material and, at least in the region of its front end, is enclosed by a carrier sleeve (12) which is made of a second plastics material and has a multiplicity of radially outwardly projecting fingers (13), which are integrally formed on the carrier sleeve (12) and consist of the second plastics material, a plurality of fingers (13), distributed over the circumference of the carrier sleeve (12), forming a finger ring ($K_1$, $K_2$, $K_3$, etc.), and a multiplicity N of finger rings ($K_1$, $K_2$, $K_3$, etc.) with the same number n of fingers being arranged one behind the other in the longitudinal direction of the carrier sleeve (12), **characterized by** the following combination of parameters:

    I. number n of fingers (13) per finger ring ($K_1$, $K_2$, $K_3$, etc.): 8 to 16,
    II. number N of finger rings (($K_1$, $K_2$, $K_3$, etc.) located one behind the other in the axial direction of the carrier sleeve: $14 \leq N \leq 30$, in particular $20 \leq N \leq 27$
    III. spacing $s_1$ between the free ends of identical fingers (13) of adjacent finger rings ($K_1$, $K_2$, $K_3$, etc.): $0.6 \text{ mm} \leq s_1 \leq 1.5 \text{ mm}$ and
    IV. spacing $s_2$ between the feet of identical fingers (13) of adjacent finger rings ($K_1$, $K_2$, $K_3$, etc.): $0.2 \text{ mm} \leq s_2 \leq 0.5 \text{ mm}$ and

    **characterized in that**

    a) the length I of the fingers (13) is $1.5 \text{ mm} \leq I \leq 3.0 \text{ mm}$,

b) the bending radius, that is to say the curvature, of the core in the region of the carrier sleeve is from $r_K$ = 12 mm to 50 mm, and

c) the fingers are located perpendicularly to the applicator axis (A-A) and finger rings form parallel discs.

2. Applicator according to Claim 1, **characterized by** the following combination of parameters:

    I. n = 10 IV.$s_1$ = 0.95 mm
    II. N = 27 V.$s_2$ = 0.25 mm.
    III. l = 2.4 mm VI.$r_K$ = 25 mm

3. Applicator according to Claim 1, **characterized by** the following combination of parameters:

    I. n = 12 IV.$s_1$ = 1.2 mm
    II. N = 22 V.$s_2$ = 0.42 mm.
    III. l = 2.4 mm VI.$r_K$ = 15 mm

4. Applicator according to one of Claims 1 to 3, **characterized in that** the fingers (13) of the finger ring ($K_1$, $K_2$, $K_3$, etc.) are distributed equally over the circumference of the carrier sleeve (12).

5. Applicator according to one of Claims 1 to 4, **characterized in that** the applicator has an external diameter D in the range from 6.0 mm to 10.0 mm.

6. Applicator according to Claim 5, **characterized in that** the external diameter D of the applicator is 8.0 mm.

7. Applicator according to one of Claims 1 to 6, **characterized in that** the external diameter d of the core (11) is in the range from 1.5 mm to 2.5 mm.

8. Applicator according to Claim 7, **characterized in that** the external diameter d of the core (11) is 2.0 mm.

9. Applicator according to one of Claims 1 to 8, **characterized in that** the core (11) tapers at its front end.

10. Applicator according to one of Claims 1 to 9, **characterized in that** the carrier sleeve (12) has a radial wall thickness a in the range from 0.3 mm to 1.0 mm.

11. Applicator according to Claim 10, **characterized in that** the radial wall thickness a of the carrier sleeve (12) is 0.6 mm.

12. Applicator according to one of Claims 1 to 11, **characterized in that** the carrier sleeve (12), together with the fingers (13), consists of an elastomeric plastics material.

13. Applicator according to one of Claims 1 to 12, **characterized in that** the carrier sleeve (12) has an axial length L in the range from 20.0 mm to 35.0 mm.

14. Applicator according to Claim 13, **characterized in that** the axial length L of the carrier sleeve (12) is 25.0 mm.

15. Applicator according to one of Claims 1 to 14, **characterized in that** the carrier sleeve (12), in its front end section (12b), projects beyond the front end (11d) of the core (11) by the extent v, where v is in the range from 1.0 mm to 8.0 mm.

16. Applicator according to Claim 15, **characterized in that** the extent v is 3.0 mm.

17. Applicator according to one of Claims 1 to 16, **characterized in that** at least one finger of a finger ring is offset by the extent $v_F$ in the longitudinal direction of the carrier sleeve (12) in relation to the other fingers of the finger ring.

18. Applicator according to Claim 17, **characterized in that** every second finger of the finger ring is offset.

19. Applicator according to Claim 17 or 18, **characterized in that** for the extent $v_F$:

$$v_F = f \times d_F,$$

where $d_F$ is the foot diameter of the finger (13) and f is a factor in the range from 0 to 1.5.

20. Applicator according to one of Claims 1 to 19, **characterized in that** adjacent finger rings ($K_1$, $K_2$, $K_3$, etc.) are offset in relation to one another by an angle $\alpha$ in the circumferential direction, where $0° \leq \alpha \leq 10°$.

21. Applicator according to one of Claims 1 to 20, **characterized in that** the foot diameter $d_F$ of the finger (13) is in the range from 0.4 mm to 1.0 mm.

22. Applicator according to Claim 21, **characterized in that** the foot diameter $d_F$ of the finger (13) is 0.68 mm.

23. Applicator according to one of Claims 1 to 22, **characterized in that** the fingers (13) are designed in the form of cones or pyramids and are rounded at their free end.

24. Applicator according to Claim 23, **characterized in that** a radius R of the rounded formation is in the range from 0.02 mm to 0.2 mm.

25. Applicator according to Claim 24, **characterized in**

**that** the radius R of the rounded formation is 0.05 mm.

**Revendications**

1. Applicateur pour produits liquides ou pâteux, notamment pour produits cosmétiques décoratifs tels que du mascara, comprenant un noyau rigidifiant falciforme (11) en un premier matériau en plastique, qui est entouré au moins dans la région de son extrémité avant d'un manchon de support (12) en un deuxième matériau en plastique, qui présente une pluralité de doigts (13) saillant radialement vers l'extérieur, qui sont formés d'une seule pièce sur le manchon de support (12) et qui se composent du deuxième matériau en plastique, plusieurs doigts (13) répartis sur la périphérie du manchon de support (12) formant une couronne de doigts ($K_1$, $K_2$, $K_3$, ...) et, dans la direction longitudinale du manchon de support (12), une pluralité N de couronnes de doigts ($K_1$, $K_2$, $K_3$,...) avec le même nombre de doigts n étant disposées les unes derrière les autres, **caractérisé par** la combinaison suivante de paramètres :

    I. Nombre n de doigts par couronne de doigts ($K_1$, $K_2$, $K_3$, ...) : 8 à 16,
    II. Nombre N des couronnes de doigts ($K_1$, $K_2$, $K_3$,...) disposées les unes derrière les autres dans la direction axiale du manchon de support : $14 \leq N \leq 30$, notamment $20 \leq N \leq 27$,
    III. Distance $s_1$ des extrémités libres de doigts de même type (13) de couronnes de doigts ($K_1$, $K_2$, $K_3$,...) voisines : $0,6 \text{ mm} \leq s_1 \leq 1,5 \text{ mm}$ et
    IV. Distance $s_2$ des bases de doigts de même type (13) de couronnes de doigts ($K_1$, $K_2$, $K_3$,...) voisines : $0,2 \text{ mm} \leq s_2 \leq 0,5 \text{ mm}$ et

    **caractérisé en ce que**

    a) la longueur l des doigts (13) vaut $1,5 \text{ mm} \leq l \leq 3,0 \text{ mm}$,
    b) le rayon de courbure, c'est-à-dire la courbure du noyau dans la région du manchon de support vaut de $r_K = 12 \text{ mm}$ à 50 mm et
    c) les doigts sont perpendiculaires à l'axe de l'applicateur (A-A) et les couronnes de doigts forment des disques parallèles.

2. Applicateur selon la revendication 1, **caractérisé par** la combinaison suivante de paramètres :

    I. n = 10 IV. $s_1$ = 0,95 mm
    II. N = 27 V. $s_2$ = 0,25 mm
    III. l = 2,4 mm VI. $r_K$ = 25 mm

3. Applicateur selon la revendication 1, **caractérisé par** la combinaison suivante de paramètres :

    I. n = 12 IV. $s_1$ = 1,2 mm
    II. N = 22 V. $s_2$ = 0,42 mm
    III. l = 2,4 mm VI. $r_K$ = 15 mm

4. Applicateur selon l'une quelconque des revendications 1 à 3, **caractérisé en ce que** les doigts (13) de la couronne de doigts ($K_1$, $K_2$, $K_3$,...) sont répartis uniformément sur la périphérie du manchon de support (12).

5. Applicateur selon l'une quelconque des revendications 1 à 4, **caractérisé en ce que** l'applicateur présente un diamètre extérieur D dans la plage de 6,0 mm à 10,0 mm.

6. Applicateur selon la revendication 5, **caractérisé en ce que** le diamètre extérieur D de l'applicateur vaut 8,0 mm.

7. Applicateur selon l'une quelconque des revendications 1 à 6, **caractérisé en ce que** le diamètre extérieur d du noyau (11) est compris dans la plage de 1,5 mm à 2,5 mm.

8. Applicateur selon la revendication 7, **caractérisé en ce que** le diamètre extérieur d du noyau (11) vaut 2,0 mm.

9. Applicateur selon l'une quelconque des revendications 1 à 8, **caractérisé en ce que** le noyau (11) se rétrécit à son extrémité avant.

10. Applicateur selon l'une quelconque des revendications 1 à 9, **caractérisé en ce que** le manchon de support (12) présente une épaisseur de paroi radiale a dans la plage de 0,3 mm à 1,0 mm.

11. Applicateur selon la revendication 10, **caractérisé en ce que** l'épaisseur de paroi radiale a du manchon de support (12) vaut 0,6 mm.

12. Applicateur selon l'une quelconque des revendications 1 à 11, **caractérisé en ce que** le manchon de support (12) se compose conjointement avec les doigts (13) d'un plastique élastomère.

13. Applicateur selon l'une quelconque des revendications 1 à 12, **caractérisé en ce que** le manchon de support (12) possède une longueur axiale L dans la plage de 20,0 mm à 35,0 mm.

14. Applicateur selon la revendication 13, **caractérisé en ce que** la longueur axiale L du manchon de support (12) vaut 25,0 mm.

15. Applicateur selon l'une quelconque des revendications 1 à 14, **caractérisé en ce que** le manchon de support (12) dépasse dans sa portion d'extrémité avant (12b) de la mesure v au-delà de l'extrémité avant (11d) du noyau (11), v étant comprise dans la plage de 1,0 mm à 8,0 mm.

**16.** Applicateur selon la revendication 15, **caractérisé en ce que** la mesure v vaut 3,0 mm.

**17.** Applicateur selon l'une quelconque des revendications 1 à 16, **caractérisé en ce qu'**au moins un doigt d'une couronne de doigts est décalé par rapport aux autres doigts de la couronne de doigts de la mesure $v_F$ dans la direction longitudinale du manchon de support (12).

**18.** Applicateur selon la revendication 17, **caractérisé en ce qu'**un doigt sur deux de la couronne de doigts est décalé.

**19.** Applicateur selon la revendication 17 ou 18, **caractérisé en ce que**, pour la mesure $v_F$, on a :

$$v_F = f \times d_F,$$

avec $d_F$ étant le diamètre de la base du doigt (13) et f étant un facteur dans la plage de 0 à 1,5.

**20.** Applicateur selon l'une quelconque des revendications 1 à 19, **caractérisé en ce que** des couronnes de doigts voisines ($K_1$, $K_2$, $K_3$, ...) sont décalées d'un angle $\alpha$ les unes par rapport aux autres dans la direction périphérique, avec $0° \leq \alpha \leq 10°$.

**21.** Applicateur selon l'une quelconque des revendications 1 à 20, **caractérisé en ce que** le diamètre de la base $d_F$ du doigt (13) est compris dans la plage de 0,4 mm à 1,0 mm.

**22.** Applicateur selon la revendication 21, **caractérisé en ce que** le diamètre de la base $d_F$ du doigt (13) vaut 0,68 mm.

**23.** Applicateur selon l'une quelconque des revendications 1 à 22, **caractérisé en ce que** les doigts (13) sont de forme conique ou pyramidale, et sont arrondis à leur extrémité libre.

**24.** Applicateur selon la revendication 23, **caractérisé en ce qu'**un rayon R de l'arrondi est compris dans la plage de 0,02 mm à 0,2 mm.

**25.** Applicateur selon la revendication 24, **caractérisé en ce que** le rayon R de l'arrondi vaut 0,05 mm.

Fig. 1

Fig. 3

Fig. 2

*Fig. 4*

*Fig. 5*

Fig. 6

Fig. 7

Fig. 8